# EUROPEAN PATENT SPECIFICATION

(11) **EP 2 818 293 B1**
(45) Date of publication and mention of the grant of the patent: **05.04.2017**
(21) Application number: 14173610.8
(22) Date of filing: 24.06.2014
(51) Int. Cl.: B29C 39/02

(54) **METHOD FOR MANUFACTURING A FLEXIBLE WEAR-RESISTANT PART OF LAYERED POLYURETHANE AND RUBBER**
Verfahren zur Herstellung eines flexiblen, verschleißfesten Teils aus geschichtetem Polyurethan und Gummi
Procédé de fabrication d'un élément souple, résistant à l'usure de polyuréthane et de caoutchouc en couche

(30) Priority: 24.06.2013 NL 2011026
(43) Date of publication of application: 31.12.2014
(73) Proprietor: Herikon B.V., 7601 PS Almelo (NL); Ris Rubber N.V., 8211 AB Lelystad (NL); Wear & Tear Solutions B.V., 4705 AG Roosendaal (NL)
(72) Inventor: Zengerink, Hendrikus Johannes, 7601 PS Hengelo (NL); Tims, Wouter, 4705 AG Roosendaal (NL); Rietdijk, Wouter, 8211 AB Lelystad (NL)
(74) Representative: Mink-Lindenburg, Charlotte Hildegard

(56) References cited:
- EP-A1- 1 749 633
- EP-A2- 0 142 716
- EP-A2- 0 358 084
- GB-A- 2 264 502

## Description

The present invention relates to a method for manufacturing a flexible wear-resistant part of layered polyurethane and rubber.

The plastic polyurethane combines a high strength and stiffness with high elasticity and is therefore highly suitable as raw material for wear-resistant parts for diverse fields of application. Applicant has developed a method for manufacturing a flexible wear-resistant part of layered polyurethane, whereby different types of polyurethane of differing hardness are successfully adhered. This method is described in the European patent EP1749633.

The present invention has for its purpose to provide an alternative method for manufacturing a layered flexible wear-resistant part.

The method according to the invention comprises the following steps of:
a) pouring into a first mould a quantity of polyurethane with a first hardness in order to form a first layer;
b) allowing the first layer of polyurethane to cure for a certain time for forming an intermediate product of polyurethane;
c) placing the intermediate product into a second mould;
d) adding a quantity of natural rubber with a second hardness which differs from the first hardness to the second mould;
e) vulcanizing the rubber directly onto the intermediate polyurethane product to obtain adhesion to the intermediate product to form the wear-resistant part.

The wear-resistant part manufactured by the method according to the invention effectively combines the wear-resistant characteristics of polyurethane with the flexibility of rubber. By vulcanizing the rubber directly onto the intermediate polyurethane product a surprisingly strong and reliable adhesion between the rubber and the polyurethane is achieved. High quality products of layered polyurethane and rubber can thus be manufactured. Advantageously the choice of rubber furthermore leads to a cost-efficient alternative for the known method.

A method according to the preamble of claim 1 is known from EP0142716. The known method relates to manufacturing a sandwich material of two layers of rubber and a layer of polyurethane that is applied onto the joint rubber layers.

*The application continues on page 1, line 31 as originally filed* vulcanization time is shortened since the rubber is additionally heated up through the occurring frictional heat from the injection in the cavities.

In order to improve the adhesion between the rubber and the polyurethane prior to step c) at least part of the surface of the intermediate product is at least partly roughened to form a bonding surface. The adhesion can be further improved by applying an adhesive layer to the bonding surface.

The wear resistance and the mechanical properties of the polyurethane can be further enhanced in advantageous manner by adding one or more additives, carbides or a mixture thereof. Step a) of the method then comprises the following steps of:
a1) measuring off a part of the quantity of polyurethane;
a2) adding at least one additive to the part of polyurethane;
a3) pouring into the mould the part of polyurethane with the additive in order to form a partial layer of polyurethane;
a4) allowing the partial layer of polyurethane to cure for a certain time; and
a5) pouring the rest of the quantity of polyurethane over the partial layer in order to complete the first layer.

A good and rapid adhesion of the two types of polyurethane, one of these with additive, is obtained when the part for forming the partial layer amounts to 5 to 25% by weight of the quantity of polyurethane.

In a further preferred embodiment the method further comprises the step of arranging one or more insert elements at predetermined positions in the mould. The form stability and the mechanical properties of the wear-resistant part to be manufactured can be modified by means of the insert elements.

The polyurethane preferably comprises TDI polyurethane with a hardness in the range between 80° Shore A and 75° Shore D.

The rubber preferably is a natural, essentially non-vulcanized rubber having a hardness falling substantially in the range between 30° Shore A and 50° Shore A.

Suitable additives include tungsten carbide or silicon carbide or a mixture thereof, preferably in a proportion of 10 to 20% by weight of the part for forming the partial layer of polyurethane.

The invention also relates to a wear-resistant part manufactured in accordance with the method according to the invention. In a first preferred embodiment the wear-resistant part is a sealing ring for a closing device of a transport pipeline for liquid material. Advantageously much less force is needed to operate the closing device with the sealing ring according to the invention. Consequently a drive with lower power suffices and energy as well as costs can be saved.

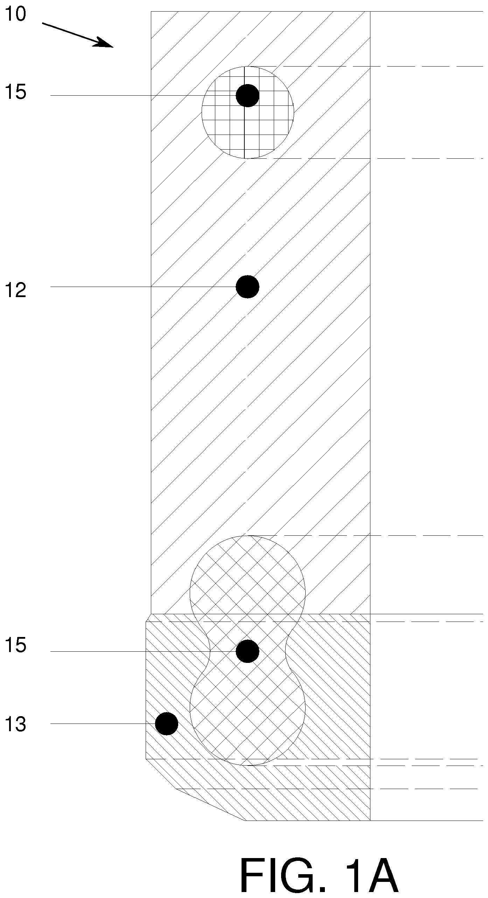

The invention will now be discussed in more detail with reference to the drawings, in which
Figure 1A is a schematic section of a wear-resistant part manufactured in accordance with a preferred embodiment of the method according to the invention;

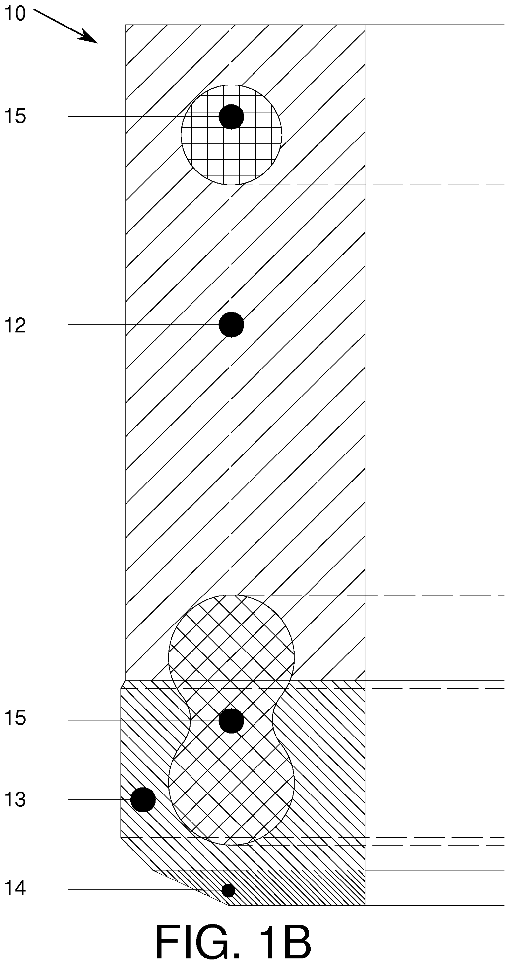

Figure 1B shows a schematic section of a variant of the wear-resistant part of figure 1A; and

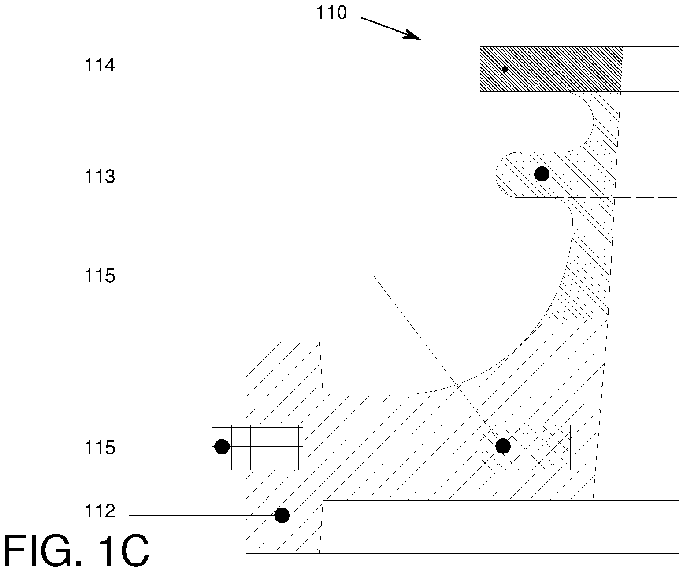

Figure 1C shows a schematic section of a wear resistant part in accordance with a further preferred embodiment of the method according to the invention.

Like components are designated in the figures by means of the same reference numerals.

Figure 1A shows a preferred embodiment of a sealing element, such as a sealing ring 10 for a slide closure or closing valve in a transport pipeline for liquid material which may or may not be abrasive and/or clogging material.

Sealing ring 10 comprises a hollow body 12 of a generally cylindrical shape. Situated at an outer end of body 12 is a nose ring 13 which during use lies against the slide or valve of the closing device.

Sealing ring 10 comprises insert elements 15. The insert elements are co-moulded objects of a foreign material, generally referred to in the field as "inlays". Some examples of suitable insert elements are: metal rings, air chambers, foam rubber etc. Through use of suitable insert elements diverse properties of the sealing ring can be modified to the intended application, such as the form stability, strength, rigidity, coefficient of friction etc. In the shown preferred embodiment the respective insert elements 15 are steel rings.

According to the invention nose ring 3 is moulded from polyurethane with a first hardness. An example of a suitable type of polyurethane is toluene diisocyanate (TDI) with a hardness of 95° Shore A. Body 12 is moulded according to the invention from rubber with a second hardness which is lower than the first hardness. An example of a suitable type of rubber is natural, non-vulcanized rubber with a hardness of 30 to 50° Shore A.

Sealing ring 10 manufactured from the layered polyurethane and rubber according to the invention has an elastic body 12, which can follow the movements of the slide closure or closing valve and which is itself resistant to wear by passing abrasive material. At the position of nose ring 13 the wear resistance is greatest so as to be able to withstand the movement of the slide or valve of the closing device. Sealing ring 10 protects the housing of the closing device optimally from wear caused by the passing abrasive material.

Example A describes the manufacture of sealing ring 10 of figure 1A in accordance with the method according to the invention.

### EXAMPLE A

Insert elements 15 are arranged at predetermined positions, for instance at equidistant positions, in a selected first mould. The mould is then preheated in the manner usual in the field. A quantity of TDI polyurethane 95° Shore A is poured into the mould. For a sealing ring the quantity of TDI polyurethane varies between substantially 100 grams and 10 kilograms, depending on the intended dimensions of the sealing ring. In the remainder of example A use is made of a quantity of 1000 grams of TDI polyurethane.

The poured layer of TDI polyurethane must cure for a predetermined time which varies substantially between 2 and 6 minutes. Final curing takes place in an oven in the manner which is per se usual for polyurethane in the field.

As a result an intermediate product is formed of polyurethane with insert elements to which the rubber needs to be adhered.

For a sealing ring the quantity of rubber generally varies between substantially 1000 grams and 60 kilograms, depending on the intended dimensions of the sealing ring. In the remainder of example A use is made of a quantity of rubber of 3500 grams. The rubber used in example A is natural rubber with a hardness between 35° Shore A and 40° Shore A.

Part of the surface of the intermediate product is roughened, for example by steel-grit blasting, to form a bonding surface for the rubber. Then an adhesive layer is arranged on the bonding surface. The adhesive layer may comprise a primer layer and subsequently a top layer. Suitable types of adhesives are rubber to substrate adhesives, such as Chemosil.

The intermediate product, surface treated as described above, is placed in the cavity of a selected second mould, in this example a compression transfer vulcanization mould. Suitable compression transfer vulcanization moulds are known per se in the relevant field. The dimensions of the second mould will be adjusted to the final product. Optionally further insert elements 15 are arranged at predetermined positions, for instance at equidistant positions, in the second mould. The rubber is placed in the transfer pot of the selected compression transfer vulcanization mould. Using a vulcanization press a high pressure, preferably between 50 and 200 bar, is applied to the compression transfer vulcanization mould. The temperature in the vulcanization press is set between 100 and 180 degrees. Suitable vulcanization presses are known per se in the relevant field and are also referred to as rubber press machines. The vulcanization process takes between 2 and 8 hours to obtain adhesion of the rubber to the intermediate polyurethane product. As a result a cured product of layered polyurethane and rubber is formed.

Figure 1B shows a variant of sealing ring 10. In the shown variant sealing ring 10 is provided with a nose ring 13 with an additionally strengthened front part 14. This is achieved according to the invention by adding to the polyurethane one or more additives or carbides or a mixture thereof. Suitable additives are for instance: tungsten carbide or silicon carbide or a mixture thereof. The wear resistance of such an additionally strengthened nose ring is even greater, and the coefficient of friction lower, due to the addition of these additives.

The shown variant is otherwise wholly similar to the original sealing ring 10 of figure 1A.

Example B describes the manufacture of the variant shown in figure 1B of the sealing ring 10 in accordance with the method according to the invention.

### EXAMPLE B

Insert elements 15 are arranged at predetermined positions, for instance at equidistant positions, in a selected first mould. The mould is preheated in the manner usual in this field. A quantity of TDI polyurethane 95° Shore A is measured off. In example B use is made of a quantity of 1000 grams.

A part of the quantity of 1000 grams TDI polyurethane is measured off in order to form a part of a first layer, or a partial layer. This part preferably amounts to substantially 5 to 25% by weight. In this example the part is 250 grams.

The additive is added to the part of TDI polyurethane. The amount of additive generally amounts to 5 to 25% by weight of the part of TDI polyurethane. In this example use is made of 10% by weight and the amount of additive amounts to 25 grams.

The part of TDI polyurethane with additive is poured into the first mould.

The poured partial layer of TDI polyurethane must cure for a predetermined time, which varies substantially between 2 and 6 minutes.

The remaining part of the quantity of TDI polyurethane, this remaining part amounting in this example to 725 grams, is poured over the already poured partial layer of TDI polyurethane.

The poured layer of TDI polyurethane must cure for a predetermined time, which varies substantially between 2 and 6 minutes.
Final curing takes place in an oven in the manner which is per se usual for polyurethane in the field.

As a result an intermediate product is formed of polyurethane with insert elements to which the rubber needs to be adhered.

For a sealing ring the quantity of rubber generally varies between substantially 1000 grams and 60 kilograms, depending on the intended dimensions of the sealing ring. In the remainder of example A use is made of a quantity of rubber of 3500 grams. The rubber used in example A is natural rubber with a hardness between 35° Shore A and 40° Shore A.

Part of the surface of the intermediate product is roughened, for example by steel-grit blasting, to form a bonding surface for the rubber. Then an adhesive layer is arranged on the bonding surface. The adhesive layer may comprise a primer layer and subsequently a top layer. Suitable types of adhesives are rubber to substrate adhesives, such as Chemosil.

The intermediate product, surface treated as above, is placed in the cavity of a selected second mould, in this example a compression transfer vulcanization mould. Suitable compression transfer vulcanization moulds are known per se in the relevant field. The dimensions of the second mould will be adjusted to the final product. Optionally further insert elements 15 are arranged at predetermined positions, for instance at equidistant positions, in the second mould. The rubber is placed in the transfer pot of the selected compression transfer vulcanization mould. Using a vulcanization press a high pressure, preferably between 50 and 200 bar, is applied to the compression transfer vulcanization mould. The temperature in the vulcanization press is set between 100 and 180 degrees. Suitable vulcanization presses are known per se in the relevant field and are also referred to as rubber press machines. The vulcanization process takes between 2 and 8 hours to obtain adhesion of the rubber to the intermediate polyurethane product. As a result a cured product of layered polyurethane and rubber is formed.

In tests the sealing rings 10 according to the invention have shown to be surprisingly flexible. Especially the rubber part can be compressed with less force than expected. When used as a sealing ring for a closing valve operation of the valve requires less power, allowing the use of a lower power drive, for instance smaller hydraulic cylinders that consume less energy. Costs can thus be saved on purchasing as well as operating.

The invention is not of course limited to the shown and described preferred embodiment. It will be apparent that the method according to the invention is generally suitable for manufacturing products of layered polyurethane and rubber. Each product comprises a first layer of polyurethane with a first hardness and a second layer of rubber with a second hardness which differs from the first hardness. In a further embodiment the layer of polyurethane comprises a partial layer with an additive or carbide.

In support figure 1C shows a schematic section of a wear resistant part in accordance with a further preferred embodiment of the method according to the invention. Wear resistant part 110 is a sealing element intended to be placed around a shaft running in a bushing, for example to form a seal between an impeller and a driving side.

Sealing element 110 is manufactured using the method according to the present invention. All reference numerals in figure 1C are raised by 100 with respect to figures 1B and 1A.

Sealing element 110 comprises a rubber body 112 in which insert elements 115 are present. On top of rubber body 112 a polyurethane body 113 is situated with an additionally strengthened part 114 comprising polyurethane with additives or carbides or a mixture thereof.

The number of layers of polyurethane can be increased as required. This is also the case for the number of types of polyurethane. The increase in the number of layers and/or the number of polyurethane types can be achieved by repeatedly applying the teaching of European patent EP1749633 that is incorporated herein by reference.

The invention is generally based on the insight that high quality products of layered polyurethane and rubber can be manufactured by vulcanizing rubber directly onto an intermediate polyurethane product, since a surprisingly strong and reliable adhesion between the rubber and the polyurethane can thus be achieved.

It is emphasized for the sake of completeness that the layered polyurethane-rubber according to the invention can be applied in wear-resistant parts generally as well as in the stated applications. In addition to the stated application in hydraulic transport, for instance in wear-resistant pipes, wear-resistant bends and also nozzles, it is possible to envisage applications where an increased spring-back elasticity is important, such as buffer blocks, protective profiles, fenders etc.

The invention therefore extends generally to any embodiment which falls within the scope of the appended claims as seen in the light of the foregoing description and drawings.

## Claims

1. Method for manufacturing a flexible wear-resistant part (10; 110) of layered polyurethane and rubber, comprising the steps of:
a) pouring into a first mould a quantity of polyurethane with a first hardness in order to form a first layer (13; 113); **characterized by**
b) allowing the first layer of polyurethane to cure for a certain time for forming an intermediate product (13; 113) of polyurethane;
c) placing the intermediate product (13; 113) into a second mould;
d) adding a quantity of rubber with a second hardness which differs from the first hardness to the second mould;
e) vulcanizing the rubber directly onto the intermediate polyurethane product (13; 113) to obtain adhesion to the intermediate product (13; 113) to form the wear-resistant part of layered polyurethane and rubber, whereby a vulcanization press is used and whereby the second mould is a compression transfer vulcanization mould intended to cooperate with the vulcanization press.

2. Method as claimed in claim 1, wherein in prior to step c) at least part of the surface of the intermediate product is at least partly roughened to form a bonding surface.

3. Method as claimed in claim 2, wherein an adhesive layer is applied to the bonding surface.

4. Method as claimed in any of the foregoing claims, wherein step a) comprises the following steps of:
a1) measuring off a part of the quantity of polyurethane;
a2) adding at least one additive to the part of polyurethane;
a3) pouring into the mould the part of polyurethane with the additive in order to form a partial layer (14) of polyurethane;
a4) allowing the partial layer of polyurethane to cure for a certain time; and
a5) pouring the rest of the quantity of polyurethane over the partial layer in order to complete the first layer (13).

5. Method as claimed in claim 4, wherein the part for forming the partial layer (14) amounts to 5 to 25% by weight of the quantity of polyurethane.

6. Method as claimed in any of the foregoing claims, further comprising the step of arranging one or more insert elements (15; 115) at predetermined positions in the first mould.

7. Method as claimed in any of the foregoing claims, wherein the polyurethane comprises TDI polyurethane.

8. Method as claimed in any of the foregoing claims, wherein the polyurethane has a hardness falling substantially in the range between 80° Shore A and 75° Shore D.

9. Method as claimed in any of the foregoing claims, wherein the rubber is natural, non-vulcanized rubber.

10. Method as claimed in any of the foregoing claims, wherein the rubber has a hardness falling substantially in the range between 30° Shore A and 50° Shore A.

11. Method as claimed in any of the foregoing claims 4-10, wherein the additive comprises tungsten carbide or silicon carbide or a mixture thereof.

12. Method as claimed in any of the foregoing claims 4-11, wherein the additive amounts to 10 to 20% by weight of the part for forming the partial layer of polyurethane.

## Patentansprüche

1. Verfahren zur Herstellung eines flexiblen verschleißfesten Teils (10; 110) aus geschichtetem Polyurethan sowie Kautschuk, umfassend die Schritte:
a) Gießen einer Menge an Polyurethan mit einer ersten Härte in eine erste Form, um eine erste Schicht (13; 113) auszubilden; **dadurch gekennzeichnet, dass**
b) die erste Schicht aus Polyurethan eine bestimmte Zeit aushärten gelassen wird, um ein Zwischenprodukt (13; 113) aus Polyurethan auszubilden;
c) das Zwischenprodukt (13; 113) in eine zweite Form gegeben wird;
d) eine Menge an Kautschuk mit einer zweiten Härte, die sich von der ersten Härte unterscheidet, in die zweite Form zugegeben wird;
e) der Kautschuk direkt auf das Zwischenprodukt (13; 113) aus Polyurethan vulkanisiert wird, um Adhäsion an dem Zwischenprodukt (13; 113) zu erreichen, um das verschleißfeste Teil aus geschichtetem Polyurethan sowie Kautschuk auszubilden, wobei eine Vulkanisierungspresse verwendet wird und wobei die zweite Form eine Compression-Transfervulkanisierungsform ist, die zum Zusammenwirken mit der Vulkanisierungspresse ausgebildet ist.

2. Verfahren nach Anspruch 1, wobei in vor Schritt c) mindestens ein Teil der Oberfläche des Zwischenprodukts zumindest teilweise aufgeraut wird, um eine Bindungsoberfläche auszubilden.

3. Verfahren nach Anspruch 2, wobei eine Klebstoffschicht auf die Bindungsoberfläche aufgetragen wird.

4. Verfahren nach einem der vorhergehenden Ansprüche, wobei Schritt a) die folgenden Schritte umfasst:
a1) Abmessen eines Teils der Menge an Polyurethan;
a2) Zusetzen wenigstens eines Additivs zu dem Teil des Polyurethans;
a3) Gießen des Teils des Polyurethans mit dem Additiv in die Form, um eine Teilschicht (14) aus Polyurethan auszubilden;
a4) Aushärten lassen der Teilschicht aus Polyurethan während einer bestimmten Zeit; und
a5) Gießen der Restmenge an Polyurethan über die Teilschicht, um die erste Schicht (13) zu vervollständigen.

5. Verfahren nach Anspruch 4, wobei der Teil zum Ausbilden der Teilschicht (14) 5 bis 25 Gew.-% der Menge an Polyurethan beträgt.

6. Verfahren nach einem der vorhergehenden Ansprüche, ferner umfassend den Schritt des Anordnens eines oder mehrerer Einsatzelemente (15; 115) an vorbestimmten Positionen in der ersten Form.

7. Verfahren nach einem der vorhergehenden Ansprüche, wobei das Polyurethan TDI-Polyurethan umfasst.

8. Verfahren nach einem der vorhergehenden Ansprüche, wobei das Polyurethan eine Härte hat, die im Wesentlichen im Bereich zwischen 80° Shore A und 75° Shore D liegt.

9. Verfahren nach einem der vorhergehenden Ansprüche, wobei der Kautschuk natürlicher, nichtvulkanisierter Kautschuk ist.

10. Verfahren nach einem der vorhergehenden Ansprüche, wobei der Kautschuk eine Härte hat, die im Wesentlichen im Bereich zwischen 30° Shore A und 50° Shore A liegt.

11. Verfahren nach einem der vorhergehenden Ansprüche 4-10, wobei das Additiv Wolframcarbid oder Siliziumcarbid oder eine Mischung hiervon umfasst.

12. Verfahren nach einem der vorhergehenden Ansprüche 4-11, wobei die Menge an Additiv 10 bis 20 Gew.-% des Anteils zum Ausbilden der Teilschicht aus Polyurethan beträgt.

## Revendications

1. Procédé de fabrication d'une pièce souple résistante à l'usure (10 ; 110) à base de couches de polyuréthane et de caoutchouc, comprenant les étapes consistant :
a) à couler dans un premier moule une quantité de polyuréthane ayant une première dureté en vue de former une première couche (13 ; 113); **caractérisé par**
b) à laisser durcir la première couche de polyuréthane pendant un certain temps en vue de former un produit intermédiaire (13 ; 113) en polyuréthane ;
c) à placer le produit intermédiaire (13 ; 113) dans un second moule ;
d) à ajouter dans le second moule une quantité de caoutchouc ayant une seconde dureté différente de la première dureté ;
e) à vulcaniser le caoutchouc directement sur le produit intermédiaire (13; 113) en polyuréthane en vue d'obtenir une adhérence sur produit intermédiaire (13 ; 113) pour former la pièce résistante à l'usure à base de couches de polyuréthane et de caoutchouc, une presse de vulcanisation étant utilisée et le second moule étant un moule de vulcanisation par transfert et compression destiné à coopérer avec la presse de vulcanisation.

2. Procédé selon la revendication 1, dans lequel, avant l'étape c) au moins une partie de la surface du produit intermédiaire est au moins partiellement rendue rugueuse pour former une surface de liaison.

3. Procédé selon la revendication 2, dans lequel une couche adhésive est appliquée sur la surface de liaison.

4. Procédé selon l'une quelconque des revendications précédentes, dans lequel l'étape a) comprend les étapes suivantes consistant
a1) à mesurer une partie de la quantité de polyuréthane ;
a2) à ajouter au moins un additif à la partie du polyuréthane ;
a3) à couler dans le moule la partie de polyuréthane avec l'additif en vue de former une couche partielle (14) de polyuréthane ;
a4) à laisser durcir la couche partielle de polyuréthane pendant un certain temps ; et
a5) à couler le reste de la quantité de polyuréthane sur la couche partielle en vue de terminer la première couche (13).

5. Procédé selon la revendication 4, dans lequel la partie destinée à former la couche partielle (14) est comprise entre 5 et 25 % en poids de la quantité de polyuréthane.

6. Procédé selon l'une quelconque des revendications précédentes, comprenant en outre l'étape consistant à placer un ou plusieurs éléments d'insertion (15 ; 115) dans des positions prédéterminées dans le premier moule.

7. Procédé selon l'une quelconque des revendications précédentes, dans lequel le polyuréthane comprend du polyuréthane TDI.

8. Procédé selon l'une quelconque des revendications précédentes, dans lequel le polyuréthane a une dureté située sensiblement dans la fourchette comprise entre 80° Shore A et 75° Shore D.

9. Procédé selon l'une quelconque des revendications précédentes, dans lequel le caoutchouc est du caoutchouc naturel non vulcanisé.

10. Procédé selon l'une quelconque des revendications précédentes, dans lequel le caoutchouc a une dureté située sensiblement dans la fourchette comprise entre 30° Shore A et 50° Shore A.

11. Procédé selon l'une quelconque des précédentes revendications 4 à 10, dans lequel l'additif comprend du carbure de tungstène ou du carbure de silicium ou un mélange de ceux-ci.

12. Procédé selon l'une quelconque des précédentes revendications 4 à 11, dans lequel la quantité d'additifs est comprise entre 10 et 20% en poids de la partie destinée à former la couche partielle de polyuréthane.
